# FASCICULE DE BREVET EUROPEEN

(11) **EP 0 439 530 B1**
(45) Date de publication et mention de la délivrance du brevet: **27.04.1994**
(21) Numéro de dépôt: 89912247.7
(22) Date de dépôt: 17.10.1989
(51) Int. Cl.: B29C 65/04, B29C 59/02, B29K 69/00

(54) **PROCEDE DE SOUDAGE DE POLYCARBONATE PAR HAUTE FREQUENCE**
VERFAHREN ZUM HOCHFREQUENZSCHWEISSEN VON POLYCARBONAT
METHOD FOR WELDING POLYCARBONATE BY HIGH FREQUENCY TECHNIQUE

(30) Priorité: 18.10.1988 FR 8814222
(43) Date de publication de la demande: 07.08.1991
(73) Titulaire: GEMPLUS S.C.A., F-13420 Gemenos (FR)
(72) Inventeur: DELMAR, Jean-Claude Kodak-Pathé, F-71102 Chalon-sur-Saône Cédex (FR); SCHMULCKLE, Christian Kodak-Pathé, F-71102 Chalon-sur-Saône Cédex (FR)
(74) Mandataire: Ballot, Paul Denis Jacques
(86) Numéro de dépôt international: FR8900541
(87) Numéro de publication internationale: WO9004510

(56) Documents cités:
- DE-B- 2 312 629
- FR-A- 2 120 070
- US-A- 4 678 713
- Japanese Patents Gazette, week D05, 11 March 1981, section CH, class A, page 2, abstract No. 06553, Derwent Publications Ltd, London
- Japanese Patents Gazette, week 8732, 23 September 1987, section CH, class A, page 26, abstract No. 87-225838/32, Derwent Publications Ltd, London

## Description

L'objet de la présente invention est un procédé de soudage par haute fréquence de feuilles entre elles dont l'une au moins est en polycarbonate.

Dans la technique antérieure, il est connu de souder des feuilles de polycarbonate entre elles, la méthode la plus couramment utilisée consistant à combiner les effets de la chaleur et de la pression. Par cette méthode, on introduit le sandwich formé des différentes feuilles à souder dans une presse thermique. La température doit être supérieure à la température de transition vitreuse de la substance plastique et généralement cette température est comprise entre 160°C et 180°C. La pression appliquée varie entre 100 et 1000 N/cm². En raison des temps de montée en température et de refroidissement sous pression, le temps nécessaire pour réaliser le soudage de ces plaques de polycarbonate est généralement compris entre 40 et 45 mn.

De même, dans la technique antérieure, il est connu d'utiliser la haute fréquence pour réaliser le soudage de certains matériaux.

La soudure haute fréquence résulte de l'échauffement de la matière à souder par application d'une tension alternative haute fréquence d'amplitude élevée. Pour être soudable par haute fréquence une matière plastique doit avoir un caractère dipolaire permanent et doit être constitué de chaines moléculaires mobiles pouvant osciller, cette mobilité dépendant de nombreux paramètres et notamment des conditions de fabrication, de la plastification interne et externe, de la température, de la fréquence et de l'amplitude de la haute fréquence. C'est ainsi que le PVC est un matériau particulièrement adapté pour être soudé par haute fréquence. Ce soudage est effectué entre deux électrodes métalliques que l'on maintient en pression pendant l'application de la haute fréquence. Or, des essais ont montré qu'une telle technique ne pouvait pas s'appliquer pour du polycarbonate, une raison étant que la température d'amorçage de la réaction pour du polycarbonate est trop élevée (de l'ordre de 100°C ou plus).

Ainsi, le brevet US 4 678 713 montre que le polycarbonate fait partie de cette catégorie de matériaux qui ne sont pas soudables par haute-fréquence.

En réalité, selon ce brevet la soudure du polycarbonate implique l'utilisation d'une couche adhésive formée de polymères contenant du monoxyde de carbone.

De même, la demande JP-A-55 150 321 montre également que le polycarbonate fait partie des matériaux à faible facteur de dissipation diélectrique qui ne peuvent, seuls, être soudés diélectriquement. Aussi, on ajoute à ces matériaux une couche d'une résine plastique à fort facteur de dissipation diélectrique permettant aux matériaux à faible facteur de dissipation de pouvoir être soudés par haute fréquence.

Le document FR-A-2 120 070, sur lequel le préambule de la revendication 1 est basé, décrit un procédé pour souder, notamment, deux feuilles de polycarbonate de plusieurs millimètres d'épaisseur qui ont été préalablement façonnées par chauffage à une température de l'ordre de 150°C. Ce procédé consiste à assembler ces deux feuilles façonnées en les insérant entre deux plaques rigides en verre qui ont des surfaces en regard complémentaires, puis à chauffer l'ensemble dans un autoclave à une température de 149°C et une pression de plusieurs kilogrammes par cm². Ce procédé ne peut convenir à des feuilles de polycarbonate ayant une épaisseur de l'ordre du dixième de millimètre.

Aussi l'invention a-t-elle pour objet un procédé de soudage de feuilles de polycarbonate dans un temps nettement inférieur à celui obtenu par les procédés de la technique antérieure.

C'est encore un autre objet de la présente invention que de pouvoir permettre le soudage par haute fréquence de feuilles de polycarbonate entre elles sans utiliser de feuilles supplémentaires formant adhésif.

D'autres objets de la présente invention apparaîtront dans la description plus détaillée qui va suivre.

L'invention concerne un procédé de soudage d'au moins deux feuilles de polycarbonate dans lequel :
- on superpose les feuilles à souder entre elles de manière à former un sandwich,
- on introduit le sandwich ainsi réalisé entre deux plaques de verre,
caractérisé en ce que
- lesdites plaques de verre coopèrent chacune avec une électrode métallique d'une presse du type à chauffage haute fréquence,
- on met la presse sous pression,
- on applique auxdites électrodes métalliques des signaux électriques dont la fréquence est appropriée pour exciter les liaisons moléculaires desdites feuilles de polycarbonate, au travers desdites plaques de verre, et
- on refroidit.

La description qui suit est faite en faisant référence aux dessins dans lesquels :

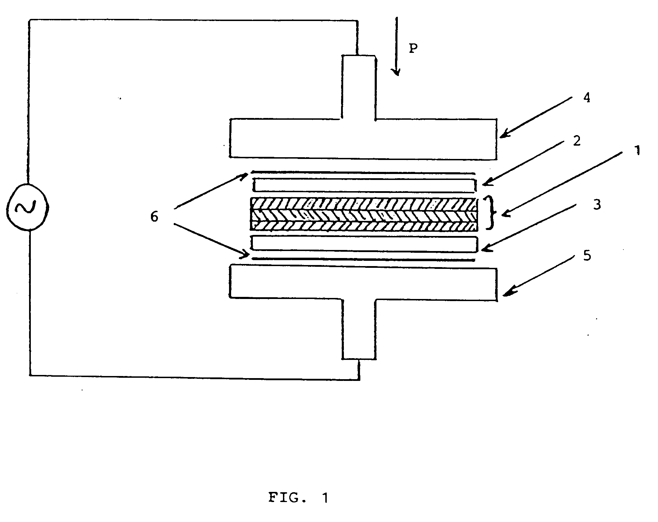

La figure 1 représente de manière schématique un mode de réalisation d'un dispositif de mise en oeuvre du procédé selon l'invention pour la fabrication de cartes magnétiques à haute densité.

On fait maintenant référence à la figure 1 représentant de façon schématique le dispositif général de mise en oeuvre du procédé selon la présente invention.

On superpose tout d'abord les feuilles à souder entre elles de manière à réaliser un "sandwich" (1). Ce sandwich (1) peut être composé uniquement de feuilles de polycarbonate ou bien composé de feuilles de polycarbonate mélangées avec des feuilles d'un autre matériau tel que du PVC par exemple.

Le sandwich ainsi réalisé est alors placé de préférence entre deux plaques de verre (2), (3), mais en réalité il suffit que l'une des faces du sandwich soit au contact d'une plaque de verre. Ce verre doit présenter certaines caractéristiques; il doit en effet être capable de résister aux chocs thermiques ainsi qu'à la compression.

On peut à cet effet utiliser un verre trempé ou une vitro-céramique du type : vision de Corning.

L'épaisseur des plaques varie en fonction de l'épaisseur des couches à assembler et peut être de l'ordre de 2 à 5 mm.

L'ensemble formé du sandwich de polycarbonate entouré des deux plaques de verre est alors placé entre les machoires (4), (5) de la presse constituées par deux pavés métalliques. Ces deux pavés métalliques jouent en même temps le rôle des électrodes pour l'application de la haute fréquence.

Dans un mode de réalisation préféré de la présente invention, on dispose une feuille (6) d'un matériau souple, ne réagissant pas à la haute fréquence, entre les plaques de verre et le métal formant chaque électrode afin d'absorber les défauts dus à une mauvaise planéité de la surface des électrodes ou de la surface des plaques de verre, en contact avec l'électrode métallique. En effet, en raison de la pression exercée, il est absolument indispensable qu'il n'y ait aucune force de flexion qui s'exerce sur les plaques de verre lorsque celles-ci sont en pression. A titre d'exemple on pourra utiliser du carton ou du Téflon®.

Ensuite lorsque l'ensemble est ainsi disposé, on établit la pression (comprise entre 100 et 1000 N/cm²) et on effectue le soudage par application d'une haute fréquence. La haute fréquence doit avoir une valeur apte à exciter les liaisons moléculaires du polycarbonate et est généralement comprise entre 25 et 30 MHz et de préférence 27,12 MHz. Dans ces conditions, le temps d'application de la haute fréquence peut être de l'ordre de 5 à 20 s et est en général inférieur à 10 s. Après cela, il est nécessaire d'attendre le refroidissement de l'ensemble avant de séparer le sandwich de polycarbonate des plaques de verre.

Dans un mode de réalisation préféré, le refroidissement s'effectue en maintenant le sandwich sous pression. En effet on a observé que, lorsque l'on supprime la pression existant pendant l'application de la haute fréquence, on obtient des défauts, tels que des bulles par exemple, qui peuvent être gênants pour certaines applications.

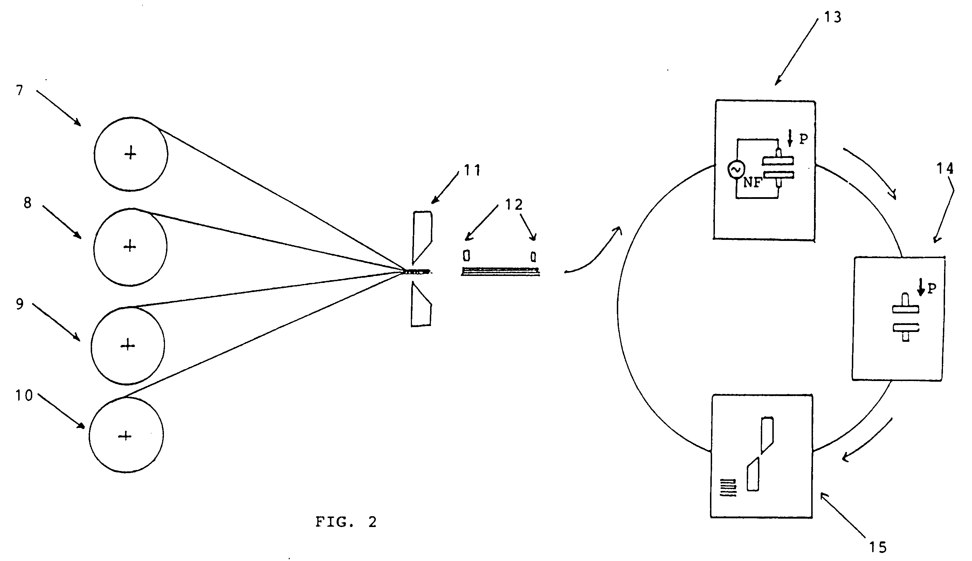

On fait maintenant référence à la figure 2 qui illustre de manière schématique un exemple de dispositif de mise en oeuvre du procédé pour la fabrication de cartes magnétiques à haute densité.

La carte magnétique que l'on souhaite réaliser est une carte magnétique à haute densité constituée d'un support semi-rigide et stable en dimension portant sur la majeure partie d'au moins une de ses surfaces un milieu d'enregistrement magnétique formé de particules magnétiques. Le support de la carte et le milieu magnétique lui-même doivent posséder une déformation élastique, c'est-à-dire, pouvoir retrouver leur forme initiale, même après des courbures répétées. La carte doit en outre être thermiquement stable pour supporter sans déformation les températures courantes de l'environnement. Pour ces raisons, on a choisi de réaliser cette carte en polycarbonate à partir de plusieurs couches superposées.

Cette carte se compose donc d'un nombre de feuillets de polycarbonate compris entre 2 et 10 de manière à réaliser un sandwich dont l'épaisseur est comprise entre 400 µm et 1000 µm, l'un de ces feuillets au moins supportant une couche magnétique. Ces feuillets de polycarbonate peuvent, à titre d'exemple, être en LEXAN®(fabriqué par General Electric Co). L'épaisseur de chaque feuillet varie entre 25 et 200 µm. En fait on constate une meilleure soudabilité dans le cas de feuilles minces que dans le cas de feuilles plus épaisses, une raison étant que, plus les feuilles sont minces, plus les pertes calorifiques par conduction à travers les électrodes seront importantes ; ceci implique une plus grande quantité d'énergie requise pour souder des feuilles de faible épaisseur.

La couche magnétique est, elle aussi, enduite sur un support de polycarbonate dont l'épaisseur varie entre 25 et 75 µm. L'épaisseur de la couche magnétique est de l'ordre de 5 µm.

Dans le cas de notre exemple représenté en figure 1, on réalise la carte à partir de 4 couches de polycarbonate (7), (8), (9), (10), incluant celle qui supporte la couche magnétique.

Par des dispositifs d'alimentation en rouleau, des dispositifs d'entraînement, de guidage et de centrage des bandes, on amène les bandes à se superposer parfaitement entre elles. On réalise alors, par des moyens appropriés (11), un premier découpage de façon à avoir un sandwich ayant la surface nécessaire pour réaliser 3 cartes (ou plus suivant les dimensions de la presse). Afin de maintenir les différentes couches parfaitement superposées, on réalise une première soudure (12) en chaque coin du sandwich. Cette soudure peut être réalisée par exemple au moyen d'ultra-sons. On introduit alors le sandwich dans un dispositif à plusieurs postes comprenant essentiellement une presse permettant d'appliquer la haute fréquence (13), une presse munie d'un circuit de refroidissement (14) et un dispositif de découpage des cartes individuelles (15).

Le sandwich passe en premier entre les mâchoires de la presse (13) permettant d'appliquer la haute fréquence. Sur chaque mâchoire de ladite presse, on dispose une plaque de verre dont l'épaisseur est de l'ordre de 5 mm. On établit alors la pression et enfin on soude en appliquant la haute fréquence.

Dans notre mode de réalisation, les conditions opératoires sont les suivantes :
- Surface du sandwich à souder : 200 mm x 90 mm
- Puissance de la presse : 6 KW
- Fréquence HF : 27,12 MHz.
- Pression sur le sandwich : 100 à 200 N/cm²
- Intensité fournie par le générateur : 1,5 A
- Temps d'application de la HF : ≃ 10 s.

Après cela, avant de pouvoir libérer le sandwich, il faut le refroidir ; en effet, la température de soudage doit être supérieure à la température de transition vitreuse du polycarbonate et est généralement comprise entre 130 et 190°C. Ce refroidissement, en raison de la planéité des surfaces requise pour une telle application, est fait en maintenant la pression utilisée lors du soudage. Cela peut être réalisé dans la presse que l'on utilise pour le soudage. Il faut compter alors environ 30 s pour redescendre à la température souhaitée (environ 30 à 35°C). Dans notre mode de réalisation, afin de libérer plus rapidement la presse à haute fréquence, on prévoit une autre presse (14) munie d'un circuit de refroidissement, un système approprié étant prévu pour assurer le transfert du sandwich sous pression dans ladite presse de refroidissement.

Lorsque la température souhaitée est atteinte, on évacue le sandwich vers un poste de découpe (15) où l'on réalise alors les cartes individuelles.

Selon un mode de réalisation préféré, avant d'introduire le sandwich entre les machoires de la presse à haute fréquence, on le fait passer dans un dispositif de préchauffage. Il peut s'agir à titre d'exemple d'une presse thermique dont les machoires supérieure et inférieure sont portées à une température supérieure à 100°C et de préférence de l'ordre de 150°C. Dans un mode de réalisation, la durée de ce préchauffage sera comprise entre 5 et 10s. En fait ce préchauffage permettra au polycarbonate de réagir plus rapidement au poste suivant lorsqu'il sera soumis à la haute fréquence. En effet, les pertes diélectriques du matériau qui lui permettent de s'échauffer sous l'effet de la haute fréquence sont très faibles en dessous d'une certaine température (pour le polycarbonate, cette température est de l'ordre de 100°C) et augmentent rapidement au dessus de cette température. Ce système de préchauffage thermique effectué sur un premier poste (non représenté) permet un gain de temps important lorsque l'on passe au poste de soudage par haute fréquence.

Ce dispositif à postes successifs permet ainsi de fabriquer de telles cartes en série et d'une manière complètement automatisée.

De plus, ce dispositif de soudage par l'intermédiaire de plaques de verre présente un avantage supplémentaire dans le cas de supports magnétiques à haute densité. En réalité, pour de tels supports magnétiques, il est nécessaire d'avoir une couche magnétique à surface extrêmement lisse et unie. En effet, la rugosité et l'ondulation de la surface de la couche provoquent, aux têtes d'enregistrement et de lecture en contact direct avec ladite couche magnétique, des effets de distance qui se traduisent par une modulation de l'amplitude ou une fluctuation du niveau des signaux enregistrés ou lus, diminuant ainsi le rapport signal/bruit obtenu. Or, lorsque l'on réalise le soudage des couches de polycarbonate directement sur des surfaces métalliques, on obtient une rugosité arithmétique qui est de l'ordre de 20 nm, alors qu'en intercalant une plaque de verre poli entre l'électrode métallique et la couche magnétique, on obtient une rugosité qui est de l'ordre de 4 à 5 nm. On obtient ainsi une amélioration de l'état de surface de la couche magnétique, qui, dans la technique antérieure, est obtenu par une opération supplémentaire de calandrage.

## Revendications

1. Procédé de soudage d'au moins deux feuilles de polycarbonate dans lequel :
- on superpose les feuilles à souder entre elles de manière à former un sandwich (1),
- on introduit le sandwich (1) ainsi réalisé entre deux plaques de verre (2,3), caractérisé en ce que
- lesdites plaques de verre (2,3) coopèrent chacune avec une électrode métallique (4,5) d'une presse du type à chauffage haute fréquence
- on met la presse sous pression,
- on applique auxdites électrodes métalliques (4,5) des signaux électriques dont la fréquence est appropriée pour exciter les liaisons moléculaires desdites feuilles de polycarbonate au travers desdites plaques de verre, et
- on refroidit.

2. Procédé selon la revendication 1, caractérisé en ce que, avant d'introduire le sandwich (1) à l'intérieur de la presse à haute fréquence, on réalise un préchauffage dudit sandwich.

3. Procédé de soudage selon la revendication 2, caractérisé en ce que la température de préchauffage est de l'ordre de 150°C.

4. Procédé selon l'une quelconque des revendications 1 à 3, caractérisé en ce que le refroidissement après soudage s'effectue en maintenant le sandwich (1) sous pression.

5. Procédé selon l'une quelconque des revendications 1 à 4, caractérisé en ce que l'on dispose une feuille (6) d'un matériau souple entre les électrodes métalliques (4,5) et lesdites plaques de verre (2,3).

6. Procédé selon l'une quelconque des revendications 1 à 5, caractérisé en ce que l'une au moins des feuilles réalisant le sandwich (1) supporte une couche magnétique.

7. Procédé selon l'une quelconque des revendications 1 à 6, caractérisé en ce que la fréquence utilisée est de 27,12 MHz.

8. Procédé selon l'une quelconque des revendications 1 à 7, caractérisé en ce que l'on refroidit sous une presse différente de celle utilisée lors du soudage.

9. Procédé selon l'une quelconque des revendications 1 à 8, caractérisé en ce que l'épaisseur des plaques de verre (2,3) est comprise entre 2 et 5 mm.

10. Procédé selon l'une quelconque des revendications 1 à 9, caractérisé en ce que la pression appliquée est comprise entre 100 et 1000 N/cm².

## Claims

1. Method for welding at least two sheets of polycarbonate, in which:
- the sheets to be welded together are superimposed so as to form a sandwich (1),
- the sandwich (1) produced in this way is inserted between two plates of glass (2, 3), characterised in that
- the said plates of glass (2, 3) each co-operate with a metal electrode (4, 5) of a press of the type having high-frequency heating,
- the press is placed under pressure,
- to the said metal electrodes (4, 5) there are applied electrical signals, the frequency of which is suitable for exciting the molecular bonds of the said polycarbonate sheets through the said plates of glass, and
- cooling is carried out.

2. Method according to claim 1, characterised in that, before inserting the sandwich (1) in the high frequency press, a pre-heating of the said sandwich is carried out.

3. Welding method according to claim 2, characterised in that the pre-heating temperature is of the order of 150°C.

4. Method according to any one of claims 1 to 3, characterised in that cooling is carried out after welding while the sandwich (1) is kept under pressure.

5. Method according to any one of claims 1 to 4, characterised in that a sheet (6) of flexible material is arranged between the metal electrodes (4, 5) and the said plates of glass (2, 3).

6. Method according to any one of claims 1 to 5, characterised in that at least one of the sheets producing the sandwich (1) supports a magnetic layer.

7. Method according to any one of claims 1 to 6, characterised in that the frequency used is 27.12 Mhz.

8. Method according to any one of claims 1 to 7, characterised in that cooling is carried out under a different press than the one used during welding.

9. Method according to any one of claims 1 to 8, characterised in that the thickness of the plates of glass (2, 3) is between 2 and 5 mm.

10. Method according to any one of claims 1 to 9, characterised in that the pressure applied is between 100 and 1000 N/cm².

## Patentansprüche

1. Verfahren zum Verschweißen von wenigstens zwei Polykarbonat-Folien, bei welchem:
- die miteinander zu verschweißenden Folien zur Bildung einer Sandwich-Struktur (1) übereinandergelegt werden,
- die auf diese Weise gebildete Sandwich-Struktur (1) zwischen zwei Glasplatten (2, 3) gelegt wird,
dadurch gekennzeichnet, daß
- die zwei Glasplatten (2, 3) jeweils mit einer Metallelektrode (4, 5) einer Presse vom Typ mit Hochfrequenzheizung zusammenarbeiten,
- die Presse unter Druck gesetzt wird,
- an die Metallelektroden (4, 5) elektrische Signale angelegt werden, deren Frequenz geeignet ist, die Molekularverbindungen der Polykarbonat-Folien durch die Glasplatten hindurch anzuregen, und
- gekühlt wird.

2. Verfahren nach Anspruch 1, dadurch gekennzeichnet, daß vor dem Einführen der Sandwich-Struktur (1) in die Hochfrequenzpresse eine Vorerwärmung der Sandwich-Struktur durchgeführt wird.

3. Schweißverfahren nach Anspruch 2, dadurch gekennzeichnet, daß die Temperatur der Vorerwärmung in der Größenordnung von 150°C liegt.

4. Verfahren nach einem der Ansprüche 1 bis 3, dadurch gekennzeichnet, daß das Kühlen nach dem Schweißen durchgeführt wird, während die Sandwich-Struktur unter Druck steht.

5. Verfahren nach einem der Ansprüche 1 bis 4, dadurch gekennzeichnet, daß zwischen den Metallelektroden (4, 5) und den Glasplatten (2, 3) eine Folie (6) aus einem nachgiebigen Material angebracht wird.

6. Verfahren nach einem der Ansprüche 1 bis 5, dadurch gekennzeichnet, daß wenigstens eine der die Sandwich-Struktur (1) bildenden Folien eine magnetische Schicht trägt.

7. Verfahren nach einem der Ansprüche 1 bis 6, dadurch gekennzeichnet, daß die angewendete Frequenz 27,12 MHz beträgt.

8. Verfahren nach einem der Ansprüche 1 bis 7, dadurch gekennzeichnet, daß das Kühlen unter einem Druck durchgeführt wird, der von dem beim Schweißen angewendeten Druck verschieden ist.

9. Verfahren nach einem der Ansprüche 1 bis 8, dadurch gekennzeichnet, daß die Dicke der Glasplatten (2, 3) zwischen 2 und 5 mm liegt.

10. Verfahren nach einem der Ansprüche 1 bis 9, dadurch gekennzeichnet, daß der angewendete Druck zwischen 100 und 1000 N/cm² liegt.
